# EUROPÄISCHE PATENTSCHRIFT

(11) **EP 4 155 137 B1**
(45) Veröffentlichungstag und Bekanntmachung des Hinweises auf die Patenterteilung: **26.02.2025**
(21) Anmeldenummer: 22194313.7
(22) Anmeldetag: 07.09.2022
(51) Int. Cl.: B60R 21/213, B60R 13/02, B60Q 3/54, B60Q 3/51

(54) **FAHRZEUG MIT EINEM KAROSSERIEFEST VERBAUTEN KOPFAIRBAG**
VEHICLE WITH A VEHICLE-MOUNTED HEAD AIRBAG
VÉHICULE DOTÉ D'UN SAC GONFLABLE POUR LA TÊTE MONTÉ DANS LA CARROSSERIE

(30) Priorität: 22.09.2021 DE 102021210517
(43) Veröffentlichungstag der Anmeldung: 29.03.2023
(73) Patentinhaber: VOLKSWAGEN AG, 38440 Wolfsburg (DE)
(72) Erfinder: Fatemi, Akbar, 38116 Braunschweig (DE)
(74) Vertreter: Bierschneider, Walter

(56) Entgegenhaltungen:
- DE-A1- 102007 003 535
- DE-A1- 102012 220 942
- DE-A1- 102015 215 215
- JP-A- 2009 274 581

## Beschreibung

Die Erfindung betrifft ein Fahrzeug mit einem karosseriefest verbauten Kopfairbag nach dem Oberbegriff des Anspruches 1.

Die Karosserie- oder Rohbaustruktur eines zweispurigen Kraftfahrzeugs weist in gängiger Praxis einen Dachrahmen auf, der aus Dachrahmen-Längsträgern (das heißt Dachrahmen-Seitenteilen) und aus Dachrahmen-Querträgern aufgebaut ist. An den Dachrahmen-Seitenteilen sind unterschiedliche Anbauteile rohbaufest angebunden, etwa Halterungen für den Kopfairbag oder Einhängebauteile zum Einhängen einer Netztrennwand-Stange.

In einem Fahrzeug wird ein karosseriefest verbauter Kopfairbag von einem Dachhimmel sichtgeschützt überdeckt. Dieser weist eine Dachhimmelöffnung für ein Funktionsteil, insbesondere Leseleuchte, auf. An der von einem Fahrzeuginnenraum abgewandten Dachhimmelrückseite ist eine Befestigungsanordnung vorgesehen, mittels der das Funktionsteil gehaltert ist.

Bei einer Kopfairbag-Aktivierung drückt der sich entfaltende Kopfairbag derart gegen den Dachhimmel, dass sich dieser unter seitlicher Verformung in den Fahrzeuginnenraum hinein aufschwenkt. Dadurch kann sich der Kopfairbag in der Fahrzeughochrichtung nach unten in den Fahrzeuginnenraum hinein entfalten.

Um eine ausreichende Crashsicherheit für den Fahrzeuginsassen bereitzustellen, ist es erforderlich, dass bei der Kopfairbag-Aktivierung der Entfaltungsweg des sich entfaltenden Kopfairbags zielgerichtet nach unten in Richtung Fahrzeuginnenraum ausgerichtet ist.

Aus der DE 10 2015 215 215 A1 ist ein gattungsgemäßer Fahrzeugdachaufbau bekannt. Aus der US 9 278 656 B2 ist ein Fahrzeug mit einem karosseriefest verbauten Kopfairbag, der von einem Dachhimmel sichtgeschützt überdeckt ist. Im Dachhimmel ist eine Belüftungsöffnung ausgebildet, die über ein Schutzschild vom Kopfairbag abgeschirmt ist. Aus der DE 20 2006 020 661 U1 ist ein weiteres Fahrzeug mit einem karosseriefest verbauten Kopfairbag bekannt.

Die Aufgabe der Erfindung besteht darin, ein Fahrzeug bereitzustellen, bei dem im Crashfall in konstruktiv einfacher Weise eine einwandfreie sowie crashsichere Kopfairbag-Entfaltung gewährleistet ist.

Die Aufgabe ist durch die Merkmale des Anspruches 1 gelöst. Bevorzugte Weiterbildungen der Erfindung sind in den Unteransprüchen offenbart.

Die Erfindung geht von einem Fahrzeug mit einem karosseriefest verbauten Kopfairbag aus, der von einem Dachhimmel sichtgeschützt überdeckt ist. Der Dachhimmel weist eine Dachhimmelöffnung für ein Funktionsteil, insbesondere eine Leseleuchte, auf. An der, vom Fahrzeuginnenraum abgewandten Dachhimmelrückseite ist eine Befestigungsanordnung vorgesehen, mittels der das Funktionsteil gehaltert wird. Die Befestigungsanordnung ragt mit einer Profilhöhe von der Dachhimmelrückseite ab. Erfindungsgemäß ist der Befestigungsanordnung zumindest ein Abschirmelement zugeordnet. Das Abschirmelement ist in einer Kopfairbag-Entfaltungsrichtung zwischen dem Kopfairbag und der Befestigungsanordnung positioniert. Auf diese Weise wird bei einer Airbagentfaltung ein scharfkantiger Bereich der Befestigungsanordnung gegenüber dem sich entfaltenden Kopfairbag abgeschirmt, wodurch eine einwandfreie sowie crashsichere Kopfairbag-Entfaltung gewährleistet ist.

Erfindungsgemäß weist die Befestigungsanordnung einen Montagerahmen auf, der an der Dachhimmelrückseite angebunden ist. Der Montagerahmen umzieht die Dachhimmelöffnung und das Funktionsteil rahmenartig. Das Funktionsteil ist mit Hilfe eines Federelements am Montagerahmen gehaltert. Beispielhaft kann das Federelement ein Blechteil mit scharfkantigen Beschnittkanten aufweisen, das durch ein Blechumformen hergestellt ist. In diesem Fall kann das Abschirmelement speziell die scharfkantigen Bereiche am Federelement abschirmen.

Der Montagerahmen kann beispielhaft in Klebverbindung mit der Dachhimmelrückseite sein. Für eine stabile Halterung des Funktionsteils kann der Montagerahmen im Querschnitt einen mit der Dachhimmelrückseite verbundenen äußeren Verbindungsflansch aufweisen. Dieser geht an einer inneren Übergangskante in einen davon abragenden Montageschenkel über. Der Montageschenkel des Montagerahmens begrenzt einen Montageschaft, in den das Funktionsteil in einem Setzvorgang in Richtung Fahrzeuginnenraum einsetzbar ist. Nach erfolgtem Setzvorgang ist das Funktionsteil in Anlage mit einem Endlage-Anschlag. Das Federelement bewirkt eine Lagesicherung des Funktionsteils. Hierzu spannt das Federelement das Funktionsteil in Richtung in Richtung Endlagen-Anschlag mit einer Federkraft vor.

Wie oben erwähnt, kann das Federelement aus einem Metallblechteil gefertigt sein. Alternativ dazu kann das Federelement auch als Kunststoffteil realisiert sein. Das Federelement kann einen Grundkörper aufweisen, der den Montageschaft des Montagerahmens zumindest teilweise überdeckt. Im Zusammenbauzustand drückt der Federelement-Grundkörper das Funktionsteil mit der Federkraft gegen den Endlagen-Anschlag. Der Federelement-Grundkörper ist mit zumindest einem Federarm seitlich nach außen verlängert. Dieser geht in einen davon abgewinkelten Raststeg über. Der Raststeg des Federarms umgreift den Montageschenkel außenseitig und ist in Rasteingriff mit einer außenseitig am Montageschenkel ausgebildeten Rastkontur. Es hat sich gezeigt, dass speziell der Federarm des Federelements gegebenenfalls eine Störkontur für den sich entfaltenden Kopfairbag bilden kann. Vor diesem Hintergrund kann das Abschirmelement insbesondere den Federarm des Federelements gegenüber den sich entfaltenden Kopfairbag abschirmen.

In einer technischen Umsetzung kann das Abschirmelement als eine Schutzrippe materialeinheitlich und einstückig am Montagerahmen angeformt sein. Die Schutzrippe kann bevorzugt am Verbindungsflansch des Montagerahmens ausgebildet sein. Zudem kann das Abschirmelement über einen Rastfreigang von der außenseitig am Montageschenkel ausgebildeten Rastkontur insbesondere in Flucht beabstandet sein. Auf diese Weise ist ein störkonturfreier Rastvorgang des Federelements durchführbar. Zudem ist im verrasteten Zustand der Raststeg des Federelements innerhalb des Rastfreigangs zwischen dem Abschirmelement und dem Montageschenkel des Montagerahmens angeordnet.

Im Hinblick auf eine einfache Federelement-Montage kann die Montageschenkel-Rastkontur ein nach außen abragender Rastvorsprung sein, der in Rasteingriff mit einer am Raststeg des Federarms ausgebildeten Rastausnehmung bringbar ist. Für eine leichtgängige Federelement-Montage kann der Rastvorsprung eine Führungsschräge aufweisen, die bei der Federelement-Montage mit einer nach außen abgestellten Anlaufflanke des Raststegs zusammenwirkt.

Bei der Federelement-Montage wird zunächst der Federelement-Grundkörper in Kontakt mit dem in den Montagerahmen eingesetzten Funktionsteil gebracht. Anschließend wird der Federarm des Federelements mit seinem Raststeg in den Rastfreigang zwischen dem Abschirmelement und dem Montageschenkel des Montagerahmens gedrückt. Dies erfolgt unter Aufbau der auf das Funktionsteil wirkenden Federkraft. Während der Federelement-Montage leitet die Anlaufflanke des Raststegs entlang der Führungsschräge des Rastvorsprungs, und zwar unter elastischer Verformung des Raststegs. Nach Überwinden des Rastvorsprung springt der Raststeg in Richtung unverformten Zustand zurück und kommt die Rastausnehmung im Raststeg in Rasteingriff mit dem Montageschenkel-Rastvorsprung.

Die Befestigungsanordnung des Funktionsteils ist bevorzugt über einen freien Abstand von der Karosseriestruktur des Fahrzeugs beabstandet, das heißt gegenüber der Karosseriestruktur anbindungsfrei. Der Endlagen-Anschlag kann mittels einer rahmenartigen Funktionsteilblende realisiert sein. Diese kann im Querschnitt betrachtet einen Stützschenkel aufweisen, der in Zusammenbaulage an der Dachhimmelsichtseite auf dem Öffnungsrandbereich der Dachhimmelöffnung abgestützt ist. Der Stützschenkel der Funktionsteil-Blende kann an einer inneren Übergangskante in einen davon abgewinkelten Rastschenkel übergehen. Im Zusammenbauzustand ist dieser in Rasteingriff mit einen innenseitig am Montageschenkel ausgebildeten Rastkontur. Der Stützschenkel der Funktionsteil-Blende kann über den Rastschenkel hinweg mit einem Überstand nach innen verlängert sein. Auf diese Weise bildet der Überstand den Endlagen-Anschlag für das Funktionsteil.

Nachfolgend ist ein Ausführungsbeispiel der Erfindung anhand der beigefügten Figuren beschrieben.

Es zeigen:
- Figur 1: in einer Seitenansicht ein zweispuriges Fahrzeug mit teilweisem Aufriss, der eine Leseleuchte in Einbaulage zeigt;
- Figur 2: eine vergrößerte Schnittdarstellung entlang einer Schnittebene A-A aus der Figur 1;
- Figuren 3 und 4: jeweils Schnittdarstellungen der Befestigungsanordnung der Leseleuchte in einer Zwischenmontageposition (Figur 3) und in einer Endmontageposition (Figur 4); und
- Figur 5: die Befestigungsanordnung in einer Ansicht von oben.

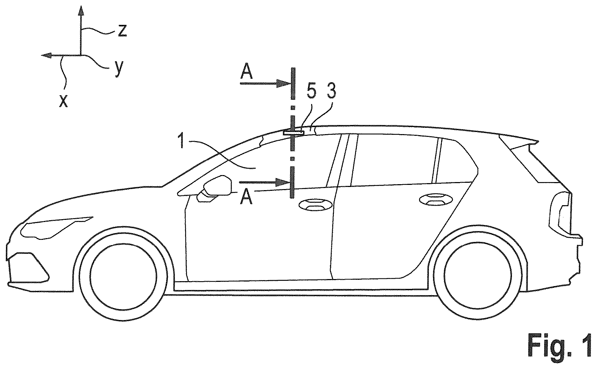

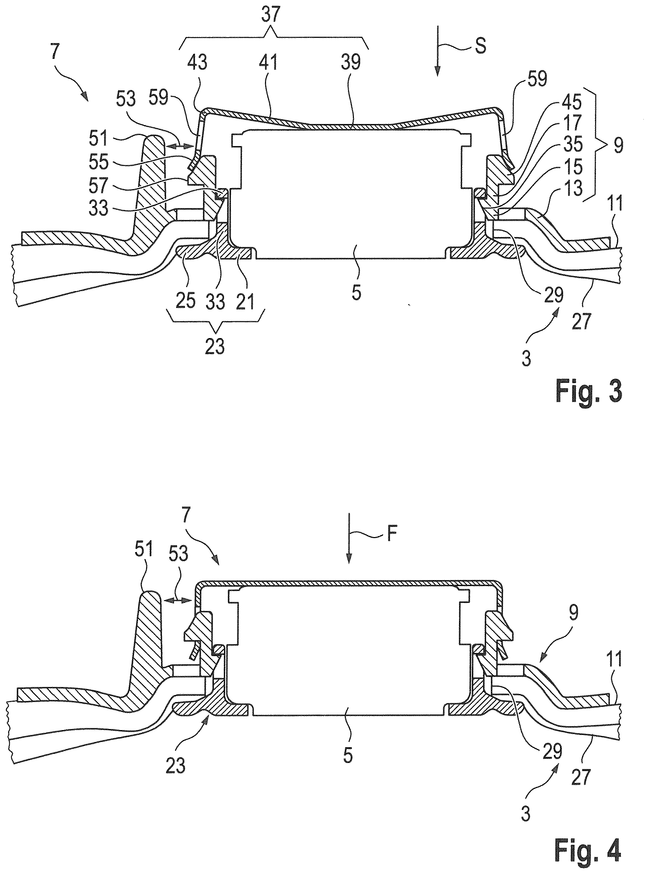

In der Figur 1 ist ein zweispuriges Fahrzeug in Seitenansicht gezeigt, dessen Fahrzeuginnenraum 1 nach fahrzeugoben von einem Dachhimmel 3 begrenzt ist. Im vorderen Sitzbereich ist im Dachhimmel 3 eine seitliche Leseleuchte 5 in etwa oberhalb der karosserieseitigen Türöffnung verbaut. Diese Leseleuchte 5 ist am Dachhimmel 3 mit Hilfe einer Befestigungsanordnung 7 gehaltert, die nachfolgend anhand der Figuren 3 bis 5 beschrieben ist. Demzufolge weist die Befestigungsanordnung 7 einen Montagerahmen 9 auf, der an die Dachhimmelrückseite 11 (zum Beispiel durch Verkleben) angebunden ist. Der Montagerahmen 9 weist im Querschnitt einen mit der Dachhimmelrückseite 11 verklebten äußeren Verbindungsflansch 13 auf, der an einer inneren Übergangskante 15 in einen davon abragenden Montageschenkel 17 übergeht. Der Montageschenkel 17 des Montagerahmens 9 begrenzt einen Montageschaft, in den das Funktionsteil 5 in einem Setzvorgang S (Figur 3) in Richtung Fahrzeuginnenraum 1 eingesetzt ist, und zwar bis in Anlage mit einem Endlagen-Anschlag 21, der an einer Leseleuchten-Blende 23 angeformt ist. Die Leseleuchte-Blende 23 ist rahmenartig ausgeführt und weist im Querschnitt betrachtet einen Stützschenkel 25 auf, der an der Dachhimmelsichtseite 27 auf dem Öffnungsrandbereich einer Dachhimmelöffnung 29 abgestützt ist. Der Stützschenkel 25 geht an einer inneren Übergangskante in einen davon abgewinkelten Rastschenkel 33 über, der in den Figuren 3 und 4 in Rasteingriff mit einer innenseitig am Montageschenkel 17 des Montagerahmens 9 ausgebildeten Rastkontur 35 ist.

Der Stützschenkel 25 der Leseleuchten-Blende 23 ist gemäß der Figur 3 über den Rastschenkel 33 hinweg mit einem Überstand nach innen verlängert, der den Endlagen-Anschlag 21 bildet.

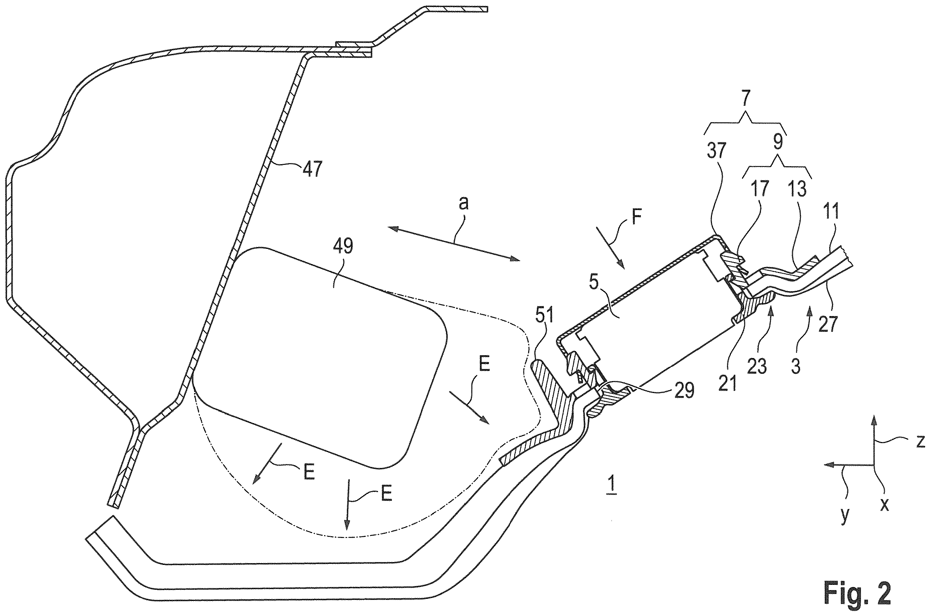

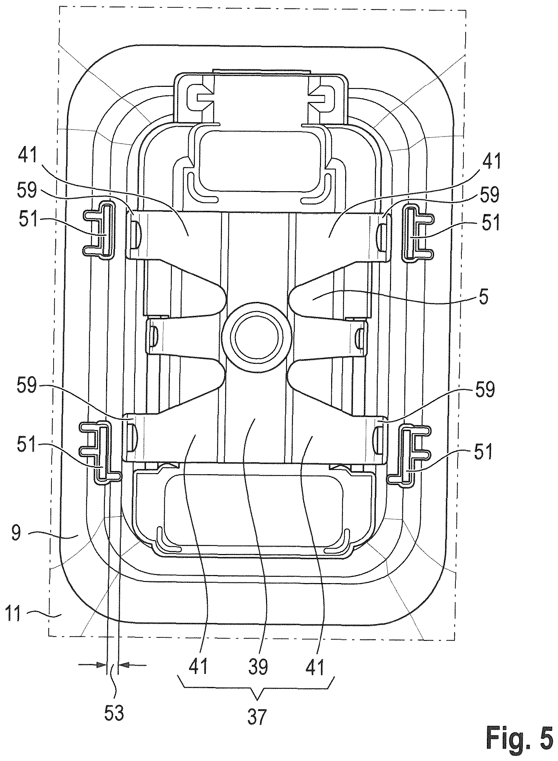

Für eine lagesichere Positionierung der Leseleuchte 5 am Endlagen-Anschlag 21 weist die Befestigungsanordnung 7 ein Federelement 37 auf, das die Leseleuchte 5 in Richtung Endlagen-Anschlag 21 mit einer Federkraft F vorspannt. Das Federelement 37 kann ein Metallblechteil sein, das durch Blechumformung hergestellt ist. In den Figuren 2 bis 5 weist das Federelement 37 einen Grundkörper 39 auf, der den Montageschaft des Montagerahmens 9 teilweise überdeckt und die Leseleuchte 5 mit der Federkraft F gegen den Endlagen-Anschlag 21 drückt. Der Federelement-Grundkörper 39 ist in der Figur 5 mit insgesamt vier voneinander beabstandeten Federarmen 41 seitlich nach außen verlängert. Jeder Federarm 41 geht in einen davon abgewinkelten Raststeg 43 über, der den Montageschenkel 17 des Montagerahmens 9 außenseitig umgreift. Der Raststeg 43 ist in der Endmontageposition (Figur 4) in Rasteingriff mit einem außenseitig am Montageschenkel 17 angeformten Rastvorsprung 45. Demgegenüber ist in der Figur 3 und in der Figur 4 eine Zwischenmontageposition gezeigt, in der das Federelement 37 mit seinen Anlaufschrägen 55 in Kontakt mit Führungsschrägen 57 der am Montageschenkel 17 ausgebildeten Rastvorsprünge 45 sind.

Gemäß der Figur 2 ist die Befestigungsanordnung 7 gegenüber einem karosserieseitigen Dachrahmenseitenteil 47 über einen freien Abstand a beabstandet, das heißt gegenüber dem Dachrahmenseitenteil 47 anbindungsfrei. Am Dachrahmenseitenteil 47 ist ein Kopfairbag 49 befestigt. Bei einer Kopfairbag-Aktivierung drückt der sich entfaltende Kopfairbag 49 (in der Figur 2 strichpunktiert angedeutet) in einer Entfaltungsrichtung E derart gegen den Dachhimmel 3, dass sich dieser unter seitlicher Verformung in den Fahrzeuginnenraum 1 hinein aufschwenkt. Dadurch kann sich der Kopfairbag 49 in der Fahrzeughochrichtung z nach unten in den Fahrzeuginnenraum 1 hinein entfalten.

Um einen störkonturfreien Entfaltungsvorgang zu gewährleisten, sind der Befestigungsanordnung 7 Abschirmelemente 51 zugeordnet, die eine prozesssichere Entfaltung des Kopfairbags 49 unterstützen. Jedes der Abschirmelemente 51 ist über einen Rastfreigang 53 von dem Montageschenkel 17 des Montagerahmens 9 beabstandet. Der Rastfreigang 53 ist derart bemessen, dass eine störkonturfreie Federelement-Montage ermöglicht ist. In den Figuren 2 bis 4 sind die Abschirmelemente 51 nur an der, dem Kopfairbag 49 zugewandten Seite positioniert. Demgegenüber sind in der Figur 5 beispielhaft sowohl an der, dem Kopfairbag 49 zugewandten Seite als auch an der an vom Kopfairbag 49 abgewandten Seite Abschirmelemente 51 positioniert.

Für die Federelement-Montage wird zunächst der Federelement-Grundkörper 39 in Kontakt mit der in den Montageschaft des Montagerahmen 9 eingesetzten Leseleuchte 5 gebracht. Anschließend werden die Federarme 41 des Federelements 37 mit ihren jeweiligen Raststegen 43 in den Rastfreigang 53 zwischen dem Abschirmelement 51 und dem Montageschenkel 17 des Montagerahmens 9 gedrückt, und zwar unter Aufbau der auf die Leseleuchte 5 wirkenden Federkraft F.

Während der Federelement-Montage gleitet die Anlaufflanke 55 des jeweiligen Raststegs 43 entlang der Führungsschräge 57 des Rastvorsprungs 45, und zwar unter elastischer Verformung des Raststegs 43 nach außen. Nach Überwinden des Rastvorsprungs 45 springt der Raststeg 43 in Richtung unverformten Zustand zurück und kommt eine Rastausnehmung 59 des Raststegs 43 in Rasteingriff mit dem Rastvorsprung 45 des Montageschenkels 17.

### Bezugszeichenliste

- 1: Fahrzeuginnenraum
- 3: Dachhimmel
- 5: Funktionsteil
- 7: Befestigungsanordnung
- 9: Montagerahmen
- 11: Dachhimmelrückseite
- 13: Verbindungsflansch
- 15: Übergangskante
- 17: Montageschenkel
- 21: Endlagen-Anschlag
- 23: Leseleuchten-Blende
- 25: Stützschenkel
- 27: Dachhimmelsichtseite
- 29: Dachhimmelöffnung
- 33: Rastschenkel
- 35: Rastkontur
- 37: Federelement
- 39: Federelement-Grundkörper
- 41: Federarm
- 43: Raststeg
- 45: Rastvorsprung
- 47: Dachrahmenseitenteil
- 49: Kopfairbag
- 51: Abschirmelement
- 53: Rastfreigang
- 55: Anlaufflanke
- 57: Führungsschräge
- 59: Rastausnehmung
- E: Entfaltungsrichtung
- F: Federkraft
- a: freier Abstand
- S: Setzvorgang

## Patentansprüche

1. Fahrzeug mit einem karosseriefest verbauten Kopfairbag (49), der von einem Dachhimmel (3) sichtgeschützt überdeckt ist, der eine Dachhimmelöffnung (29) für ein Funktionsteil (5), insbesondere Leseleuchte, aufweist, wobei an der von einem Fahrzeuginnenraum (1) abgewandten Dachhimmelrückseite (11) eine Befestigungsanordnung (7) vorgesehen ist, mittels der das Funktionsteil (5) gehaltert ist, wobei der Befestigungsanordnung (7) zumindest ein Abschirmelement (51) zugeordnet ist, das in einer Kopfairbag-Entfaltungsrichtung (E) zwischen dem Kopfairbag (49) und der Befestigungsanordnung (7) angeordnet ist, so dass bei einer Airbagentfaltung ein störkonturbehafteter Bereich der Befestigungsanordnung (7) gegenüber dem sich entfaltenden Kopfairbag (49) abgeschirmt ist, **dadurch gekennzeichnet, dass** die Befestigungsanordnung (7) einen Montagerahmen (9) aufweist, der an die Dachhimmelrückseite (11) angebunden ist und die Dachhimmelöffnung (29) sowie das Funktionsteil (5) rahmenartig umzieht, und dass das Funktionsteil (5) mit Hilfe eines Federelements (37) am Montagerahmen (9) gehaltert ist, und dass der vom Abschirmelement (51) abgeschirmte störkonturbehaftete Bereich am Federelement (37) ausgebildet ist.

2. Fahrzeug nach Anspruch 1, **dadurch gekennzeichnet, dass** der Montagerahmen (9) im Querschnitt einen mit der Dachhimmelrückseite (11) verbundenen, äußeren Verbindungsflansch (13) aufweist, der an einer inneren Übergangskante in einen davon abragenden Montageschenkel (17) übergeht, und dass der Montageschenkel (17) des Montagerahmens (9) einen Montageschaft begrenzt, in den das Funktionsteil (5) in einem Setzvorgang (S) in Richtung Fahrzeuginnenraum (1) einsetzbar ist, und zwar bis in Anlage mit einem Endlagen-Anschlag (21), und dass zur Lagesicherung das Federelement (37) das Funktionsteil (5) in Richtung Endlagen-Anschlag (21) mit einer Federkraft (F) vorspannt.

3. Fahrzeug nach Anspruch 2, **dadurch gekennzeichnet, dass** das Federelement (37) einen Grundkörper (39) aufweist, der den Montageschaft des Montagerahmens (9) zumindest teilweise überdeckt und/oder das Funktionsteil (5) mit der Federkraft (F) gegen den Endlagen-Anschlag (21) drückt, und dass insbesondere der Federelement-Grundkörper (39) mit zumindest einem Federarm (41) seitlich nach außen verlängert ist, der in einen davon abgewinkelten Raststeg (43) übergeht, und dass der Raststeg (43) des Federarms (41) den Montageschenkel (17) außenseitig übergreift und/oder in Rasteingriff mit einer außenseitig am Montageschenkel (17) ausgebildeten Rastkontur (45) ist, und/oder dass insbesondere der Federarm (41) des Federelements (37) den von dem Abschirmelement (51) abgeschirmten störkonturbehafteten Bereich bildet.

4. Fahrzeug nach einem der Ansprüche 1 bis 3, **dadurch gekennzeichnet, dass** das Abschirmelement (51) als eine Schutzrippe materialeinheitlich und einstückig am Montagerahmen (9) angeformt ist, insbesondere am Verbindungsflansch (13) des Montagerahmens (9), und/oder dass insbesondere das Abschirmelement (51) über einen Rastfreigang (53) von der außenseitig am Montageschenkel (17) ausgebildeten Rastkontur (45), insbesondere in Flucht, beabstandet ist, so dass insbesondere ein störkonturfreier Rastvorgang des Federelements (37) durchführbar ist, und/oder dass im verrasteten Zustand der Raststeg (43) des Federelements (37) im Rastfreigang (53) zwischen dem Abschirmelement (51) und dem Montageschenkel (17) des Montagerahmens (9) angeordnet ist.

5. Fahrzeug nach Anspruch 3 oder 4, **dadurch gekennzeichnet, dass** die Montageschenkel-Rastkontur (45) ein nach außen abragender Rastvorsprung ist, der in Rasteingriff mit einer am Raststeg (43) des Federarms (41) ausgebildeten Rastausnehmung (59) bringbar ist, und dass insbesondere der Rastvorsprung (45) eine Führungsschräge (57) aufweist, die bei einer Federelement-Montage mit einer nach außen abgestellten Anlaufflanke (55) des Raststegs (43) zusammenwirkt.

6. Fahrzeug nach Anspruch 5, **dadurch gekennzeichnet, dass** für die Federelement-Montage der Federelement-Grundkörper (39) in Kontakt mit dem in den Montagerahmen (9) eingesetzten Funktionsteil (5) gebracht wird, und anschließend der Federarm (41) des Federelements (37) mit seinem Raststeg (43) in den Rastfreigang (53) zwischen dem Abschirmelement (51) und dem Montageschenkel (17) des Montagerahmens (9) gedrückt wird, und zwar unter Aufbau der auf das Funktionsteil (5) wirkenden Federkraft (F).

7. Fahrzeug nach Anspruch 6, **dadurch gekennzeichnet, dass** während der Federelement-Montage die Anlaufflanke (55) des Raststegs (43) entlang der Führungsschräge (57) des Rastvorsprungs (45) gleitet, und zwar unter elastischer Verformung des Raststegs (43), und dass nach Überwinden des Rastvorsprungs (45) der Raststeg (43) in Richtung unverformten Zustand zurückspringt und die Rastausnehmung (59) des Raststegs (43) in Rasteingriff mit dem Rastvorsprung (45) des Montageschenkel (9) kommt.

8. Fahrzeug nach einem der Ansprüche 2 bis 5, **dadurch gekennzeichnet, dass** der Endlagen-Anschlag (21) in einer rahmenartigen Funktionsteil-Blende (23) ausgebildet ist, und dass die Funktionsteil-Blende (23) im Querschnitt einen Stützschenkel (25) aufweist, der an der Dachhimmelsichtseite (27) auf dem Öffnungsrandbereich der Dachhimmelöffnung (29) abgestützt ist, und dass insbesondere der Stützschenkel (25) an einer inneren Übergangskante in einen davon abgewinkelten Rastschenkel (33) übergeht, der in Rasteingriff mit einer innenseitig am Montageschenkel (17) ausgebildeten Rastkontur (35) ist, und dass insbesondere der Stützschenkel (25) der Funktionsteil-Blende (23) über den Rastschenkel (33) hinweg mit einem Überstand nach innen verlängert ist, und dass der Überstand den Endlagen-Anschlag (21) bildet.

9. Fahrzeug nach einem der vorhergehenden Ansprüche, **dadurch gekennzeichnet, dass** das Federelement (37) ein Blechteil mit scharfkantigen Beschnittkanten ist, das durch Blechumformen hergestellt ist.

## Claims

1. Vehicle having a head airbag (49) which is integrated in the vehicle body and is covered so as to be screened from view by a roof liner (3) which has a roof liner opening (29) for a functional part (5), in particular a reading light, a fastening arrangement (7) being provided on the rear side (11) of the roof liner facing away from a vehicle interior (1), the functional part (5) being held by means of the fastening arrangement, the fastening arrangement (7) being associated with at least one shielding element (51) which is arranged in a head airbag deployment direction (E) between the head airbag (49) and the fastening arrangement (7) so that, when the airbag is deployed, a region of the fastening arrangement (7) that is affected by an interfering contour is shielded from the deploying head airbag (49), **characterized in that** the fastening arrangement (7) has a mounting frame (9) which is connected to the rear side (11) of the roof liner and surrounds the roof liner opening (29) and the functional part (5) in a frame-like manner, **and in that** the functional part (5) is held on the mounting frame (9) by means of a spring element (37), **and in that** the region which is affected by interfering contours and is shielded by the shielding element (51) is formed on the spring element (37).

2. Vehicle according to claim 1, **characterized in that** the mounting frame (9) has, in cross-section, an outer connecting flange (13) which is connected to the rear side (11) of the roof liner and transitions at an inner transition edge into a mounting leg (17) projecting therefrom, **and in that** the mounting leg (17) of the mounting frame (9) delimits a mounting shaft into which the functional part (5) can be inserted in the direction of the vehicle interior (1) during a placement process (S) until it is contact with an end position stop (21), **and in that** the spring element (37) preloads the functional part (5) with a spring force (F) in the direction of the end position stop (21) to secure the part in place.

3. Vehicle according to claim 2, **characterized in that** the spring element (37) has a main body (39) which at least partially covers the mounting shaft of the mounting frame (9) and/or presses the functional part (5) against the end position stop (21) with the spring force (F), **and in that** in particular the spring element main body (39) is extended laterally outward by at least one spring arm (41) which transitions into a latching piece (43) which is angled therefrom, **and in that** the latching piece (43) of the spring arm (41) overlaps the mounting leg (17) on the outside and/or is in latching engagement with a latching contour (45) formed on the outside of the mounting leg (17), **and/or in that** in particular the spring arm (41) of the spring element (37) forms the region which is affected by interfering contours and is shielded by the shielding element (51).

4. Vehicle according to any of claims 1 to 3, **characterized in that** the shielding element (51) is molded on the mounting frame (9) as a protective rib from the same material and in one piece, in particular on the connecting flange (13) of the mounting frame (9), **and/or in that** in particular the shielding element (51) is spaced apart from, in particular so as to be in alignment with, the latching contour (45) formed on the outside of the mounting leg (17) by a latching clearance (53) so that in particular a latching process of the spring element (37) can be carried out without any interfering contours, **and/or in that** the latching piece (43) of the spring element (37) is arranged in the latching clearance (53) between the shielding element (51) and the mounting leg (17) of the mounting frame (9) in the latched state.

5. Vehicle according to claim 3 or claim 4, **characterized in that** the mounting leg latching contour (45) is an outwardly projecting latching projection which can be brought into latching engagement with a latching recess (59) formed on the latching piece (43) of the spring arm (41), **and in that** in particular the latching projection (45) has an inclined guide surface (57) which interacts with an outwardly positioned starting edge (55) of the latching piece (43) when the spring element is mounted.

6. Vehicle according to claim 5, **characterized in that,** for mounting the spring element, the spring element main body (39) is brought into contact with the functional part (5) inserted into the mounting frame (9), and then the spring arm (41) of the spring element (37) is pressed by its latching piece (43) into the latching clearance (53) between the shielding element (51) and the mounting leg (17) of the mounting frame (9) while the spring force (F) acting on the functional part (5) is built up.

7. Vehicle according to claim 6, **characterized in that** the starting edge (55) of the latching piece (43) slides along the inclined guide surface (57) of the latching projection (45) with the latching piece (43) being elastically deformed while the spring element is mounted, **and in that,** after the latching projection (45) passed over, the latching piece (43) springs back toward the undeformed state and the latching recess (59) of the latching piece (43) comes into latching engagement with the latching projection (45) of the mounting leg (9).

8. Vehicle according to any of claims 2 to 5, **characterized in that** the end position stop (21) is formed in a frame-like functional part plate (23), **and in that** the functional part plate (23) has, in cross-section, a support leg (25) which is supported on the visible side (27) of the roof liner on the opening edge region of the roof liner opening (29), **and in that** in particular the support leg (25) transitions at an inner transition edge into a latching leg (33) which is angled therefrom and is in latching engagement with a latching contour (35) formed on the inside of the mounting leg (17), **and in that** in particular the support leg (25) of the functional part plate (23) is extended inward beyond the latching leg (33) by a projecting end, **and in that** the projecting end forms the end position stop (21).

9. Vehicle according to any of the preceding claims, **characterized in that** the spring element (37) is a sheet metal part which has sharp cut edges and is produced by sheet metal forming.

## Revendications

1. Véhicule comportant un coussin gonflable pour tête (49) monté de manière fixe sur la carrosserie et recouvert, à l'abri des regards, par un ciel de toit (3) qui présente une ouverture de ciel de toit (29) pour une partie fonctionnelle (5), en particulier une lampe de lecture, dans lequel un agencement de fixation (7) est prévu sur la face arrière de ciel de toit (11) opposée à un habitacle de véhicule (1), au moyen duquel agencement de fixation la partie fonctionnelle (5) est maintenue, dans lequel au moins un élément de protection (51) est associé à l'agencement de fixation (7), lequel élément de protection est disposé, dans une direction de déploiement de coussin gonflable pour tête (E), entre le coussin gonflable pour tête (49) et l'agencement de fixation (7), de sorte que, lors d'un déploiement du coussin gonflable, une zone de l'agencement de fixation (7) présentant un contour gênant est protégée par rapport au coussin gonflable pour tête (49) qui se déploie, **caractérisé en ce que** l'agencement de fixation (7) présente un cadre de montage (9) qui est relié à la face arrière de ciel de toit (11) et qui entoure à la manière d'un cadre l'ouverture de ciel de toit (29) ainsi que la partie fonctionnelle (5), **et en ce que** la partie fonctionnelle (5) est maintenue sur le cadre de montage (9) à l'aide d'un élément élastique (37), **et en ce que** la zone présentant un contour gênant et protégée par l'élément de protection (51) est réalisée sur l'élément élastique (37).

2. Véhicule selon la revendication 1, **caractérisé en ce que** le cadre de montage (9) présente, en section transversale, une bride de liaison (13) extérieure reliée à la face arrière de ciel de toit (11), laquelle bride de liaison se transforme sur une arête de transition intérieure en une branche de montage (17) dépassant de celle-ci, **et en ce que** la branche de montage (17) du cadre de montage (9) délimite une tige de montage dans laquelle la partie fonctionnelle (5) peut être insérée dans un processus de pose (S) en direction de l'habitacle de véhicule (1), et ce jusqu'à être en appui contre une butée de position finale (21), **et en ce que,** pour assurer la position, l'élément élastique (37) précontraint la partie fonctionnelle (5) en direction de la butée de position finale (21) avec une force élastique (F).

3. Véhicule selon la revendication 2, **caractérisé en ce que** l'élément élastique (37) présente un corps de base (39) qui recouvre au moins partiellement la tige de montage du cadre de montage (9) et/ou presse la partie fonctionnelle (5) avec la force élastique (F) contre la butée de position finale (21), **et en ce que,** en particulier, le corps de base d'élément élastique (39) est prolongé latéralement vers l'extérieur par au moins un bras élastique (41) qui se transforme en une barrette d'encliquetage (43) coudée par rapport à celui-ci, **et en ce que** la barrette d'encliquetage (43) du bras élastique (41) recouvre la branche de montage (17) côté extérieur et/ou est en prise par encliquetage avec un contour d'encliquetage (45) réalisé côté extérieur sur la branche de montage (17), **et/ou en ce que,** en particulier, le bras élastique (41) de l'élément élastique (37) forme la zone présentant un contour gênant et protégée par l'élément de protection (51).

4. Véhicule selon l'une des revendications 1 à 3, **caractérisé en ce que** l'élément de protection (51) est formé en tant que nervure de protection d'un seul matériau et d'une seule pièce sur le cadre de montage (9), en particulier sur la bride de liaison (13) du cadre de montage (9), **et/ou en ce que,** en particulier, l'élément de protection (51) est écarté, en particulier en étant en alignement avec celui-ci, du contour d'encliquetage (45) réalisé côté extérieur sur la branche de montage (17) par l'intermédiaire d'un passage d'encliquetage (53), de sorte que, en particulier, un processus d'encliquetage sans contour gênant de l'élément élastique (37) peut être effectué, **et/ou en ce que,** à l'état encliqueté, la barrette d'encliquetage (43) de l'élément élastique (37) est disposée dans le passage d'encliquetage (53) entre l'élément de protection (51) et la branche de montage (17) du cadre de montage (9).

5. Véhicule selon la revendication 3 ou 4, **caractérisé en ce que** le contour d'encliquetage de branche de montage (45) est une saillie d'encliquetage faisant saillie vers l'extérieur qui peut être amenée en prise par encliquetage avec un évidement d'encliquetage (59) réalisé sur la barrette d'encliquetage (43) du bras élastique (41), **et en ce que,** en particulier, la saillie d'encliquetage (45) présente un biseau de guidage (57) qui, lors d'un montage de l'élément élastique, coopère avec un flanc d'attaque (55) de la barrette d'encliquetage (43) orienté vers l'extérieur.

6. Véhicule selon la revendication 5, **caractérisé en ce que,** pour le montage de l'élément élastique, le corps de base d'élément élastique (39) est amené en contact avec la partie fonctionnelle (5) insérée dans le cadre de montage (9), et ensuite le bras élastique (41) de l'élément élastique (37) est pressé avec sa barrette d'encliquetage (43) dans le passage d'encliquetage (53) entre l'élément de protection (51) et la branche de montage (17) du cadre de montage (9), et ce en développant la force élastique (F) agissant sur la partie fonctionnelle (5).

7. Véhicule selon la revendication 6, **caractérisé en ce que,** pendant le montage de l'élément élastique, le flanc d'attaque (55) de la barrette d'encliquetage (43) glisse le long du biseau de guidage (57) de la saillie d'encliquetage (45), et ce avec déformation élastique de la barrette d'encliquetage (43), **et en ce que,** après avoir surmonté la saillie d'encliquetage (45), la barrette d'encliquetage (43) revient dans l'état non déformé et l'évidement d'encliquetage (59) de la barrette d'encliquetage (43) vient en prise par encliquetage avec la saillie d'encliquetage (45) de la branche de montage (9).

8. Véhicule selon l'une des revendications 2 à 5, **caractérisé en ce que** la butée de position finale (21) est réalisée dans un panneau de partie fonctionnelle (23) en forme de cadre, **et en ce que** le panneau de partie fonctionnelle (23) présente, en section transversale, une branche d'appui (25) qui s'appuie sur le côté visible de ciel de toit (27) sur la zone de bord d'ouverture de l'ouverture de ciel de toit (29), **et en ce que,** en particulier, la branche d'appui (25) se transforme, au niveau d'une arête de transition intérieure, en une branche d'encliquetage (33) coudée par rapport à celle-ci et en prise par encliquetage avec un contour d'encliquetage (35) réalisé côté intérieur sur la branche de montage (17), et **en ce que,** en particulier, la branche d'appui (25) du panneau de partie fonctionnelle (23) est prolongée vers l'intérieur au-delà de la branche d'encliquetage (33) par une protubérance, **et en ce que** la protubérance forme la butée de position finale (21).

9. Véhicule selon l'une des revendications précédentes, **caractérisé en ce que** l'élément élastique (37) est une pièce en tôle comportant des arêtes de coupe à arêtes vives qui est fabriquée par formage de tôle.
